# FASCICULE DE BREVET EUROPEEN

(11) **EP 2 358 215 B1**
(45) Date de publication et mention de la délivrance du brevet: **19.09.2012**
(21) Numéro de dépôt: 09756037.9
(22) Date de dépôt: 15.10.2009
(51) Int. Cl.: A23K 1/16, A23L 1/22, A23P 1/06

(54) **PROCEDE DE PROTECTION DE PRINCIPES ACTIFS UTILISANT LE GLYCEROL**
VERFAHREN ZUM SCHÜTZEN VON WIRKSTOFFEN MITTELS GLYCERIN
METHOD FOR PROTECTING ACTIVE PRINCIPLES USING GLYCEROL

(30) Priorité: 27.10.2008 FR 0857289
(43) Date de publication de la demande: 24.08.2011
(73) Titulaire: Laboratoires Phodé, 81150 Terssac (FR); Institut National Polytechnique De Toulouse (INPT), 31029 Toulouse Cedex 4 (FR)
(72) Inventeur: ECLACHE, Daniel, F-81990 Puygouzon (FR); ETIENNE, Pierre, F-81120 Lombers (FR); NOIROT, Virginie, F-81990 Puygouzon (FR); MOULOUNGUI, Zéphirin, F-31200 Toulouse (FR); BACHAR, Zébib, F-31000 Toulouse (FR)
(74) Mandataire: Morelle, Guy Georges Alain
(86) Numéro de dépôt international: PCT/FR2009/051972
(87) Numéro de publication internationale: WO 2010/049621

(56) Documents cités:
- WO-A-00/15237
- US-A- 4 820 739
- US-A- 5 560 919
- US-A1- 2008 014 323

## Description

La présente invention concerne un procédé de protection de principes actifs utilisés dans le domaine de l'alimentation. Les principes actifs extraits de molécules naturelles sont associés à du glycérol et ses dérivés pour la préparation de produits finis stables permettant d'apporter différents bienfaits à leurs consommateurs.

Afin de pallier certaines carences chez l'homme ou dans le but d'améliorer les rendements de production chez l'animal, des compléments alimentaires sont couramment utilisés. Plusieurs types de molécules peuvent ainsi être ajoutées à l'alimentation pour obtenir des bénéfices de différente nature, que se soit sur le plan de la croissance, la production laitière, la stimulation des défenses naturelles, etc...Par exemple, certaines huiles essentielles sont ajoutées à la ration des animaux afin de prévenir des troubles digestifs dus à la prolifération de bactéries pathogènes au niveau intestinal. Des extraits végétaux antioxydants peuvent être administrés à des mammifères en période peri-partum afin de prévenir les troubles sanitaires liés aux phénomènes radicalaires particulièrement importants pendant cette période.

L'effet attendu par ces compléments est en partie réduit par le fait qu'ils sont précocement dégradés de manière naturelle par la voie digestive avant d'atteindre les sites d'absorption réellement efficaces. Ces compléments actifs peuvent être aussi dégradés par les agressions ambiantes lors de leur stockage, manipulation et encore mise en oeuvre (par exemple agression thermique et exposition à la lumière). Il en résulte une moins bonne assimilation par l'organisme et donc un moins bon résultat en matière de production.

Une solution à ce problème a été trouvée en protégeant les principes actifs de ces compléments de façon à ce qu'ils ne subissent pas ces phénomènes de dégradation indésirables.

Ainsi, des solutions d'enrobage ont essentiellement été envisagées. Celles-ci consistent à créer une couche protectrice enveloppant le produit fini par de l'huile de palme, des polymères synthétiques (méthyle cellulose) ou naturels (alginate). Des solutions d'inclusion dans un support absorbant inerte (dextrine, cyclodextrine, silice) ont également été développées. Les procédés de protection existants ne font intervenir qu'un seul système de protection. Un tel procédé est décrit par exemple dans US 5560919.

Les systèmes de protection moléculaires connus pour le moment font généralement intervenir des complexes de molécules lipidiques amphiphiles agencées sous la forme de microémulsion, liposome allant de 5 à 20 nm ou bien alors à l'échelle un peu plus importante de nanoémulsion ou encore de nanoparticules biopolymérique comprises entre 10 et 1000 nm (H. Chen et al. Foodtechnology 03/06 30-36 ; Gaysinsky, S. et al. J Food Protect. 2005, 68 : 1359-1366 *;* Were, L.M., J. Agric. Food Chem., 2004, 51 : 8073-8079 *;* Weiss J. et al. In « Encyclopedia of Surface and Colloid Science », 2002, 3123-3151. Marcel Dekker, New York).

Des molécules bioactives peuvent être encapsulées à l'intérieur des particules de silice par polymérisation sol-gel ou chimie des émulsions (K. Kataoka et al. Adv. Drug Delivery Rev. 2001 ; I. Gill, J. Am. Chem. Soc. 1998 ; J. Livage, J. Sol-Gel Sci. Technol. 1996 ; K . S. Finnie, J. Mater. Chem. 2000 ; S. Dire, Eur. Mater. Res. Soc. Monogr. 1992 ; S. Boninsegna, M. Rossi, J. Biotechnol. 2003 ; C. Barbé et al., Adv. Mat. 2004).

La chélation est un processus physico-chimique connu au cours duquel est formé un complexe (le chélate) entre un ligand (chélatant), et un cation (ou atome) métallique (chélaté). Au cours de la réaction de chélation, des molécules amphiphiles (tensio-actif) sont dispersées dans un solvant polaire. Ces solvants sont généralement évaporés et récupérés après la chélation, ceci implique une demande énergétique importante et des installations de purification du solvant récupéré pour recyclage dans une autre synthèse. Par interactions hydrophobes, des auto-assemblages de phases stables de différentes formes se mettent en place (micelles, micelles inverse, bicouche, vésicule, phase lamellaire, phase hexagonale inverse ; phase éponge, phase cubique bicontinue).

Les solvants utilisés dans les procédés industriels de chélation de principe actif sont bien connus. Parmi eux, l'éthanol est utilisé.

De manière surprenante, le demandeur s'est intéressé à un autre type de composé pour jouer le rôle de solvant : la glycérine et ses dérivés.

Ces composés sont largement disponibles car ils sont produits en fin de chaîne de nombreuses industries, notamment dans la production de biocarburant. Ils sont utilisés en tant qu'alternative naturelle du monopropylène glycol qui est un solvant issu de la pétrochimie. La glycérine est le sous-produit brut de la production de diester et contient un pourcentage variable de glycérol selon la qualité de sa purification. Parmi les dérivés du glycérol, et donc de la glycérine, le monolaurate de glycérol (MLG) est également utilisé dans le procédé objet de l'invention. Le MLG présente une action antimicrobienne et peut être utilisé comme émulsifiant.

Ces composés présentent en outre l'avantage d'être alimentaires. Ils peuvent donc à ce titre être conservés dans le produit final et être ingérés par les consommateurs sans aucun problème de toxicité.

Le développement d'un procédé permettant de valoriser la glycérine et ses dérivés constitue donc un aspect particulièrement avantageux. A ce jour, des tentatives de valorisation du glycérol ont été envisagées dans différentes applications telles que la cosmétique, la pharmaceutique ou encore l'écologie (remplacement de solvant pétrochimique souvent pollueur et faiblement biodégradable dans des formulations industrielles - peintures - colles - vernis - agent de traitement de surface etc...). La filière alimentaire a été explorée, notamment par l'utilisation du glycérol en tant qu'apport énergétique journalier à des animaux en déficit d'énergie. Mais le glycérol n'a pas été envisagé jusqu'à présent dans une double application permettant à la fois d'utiliser ses propriétés alimentaires et ses propriétés en tant que solvant.

La présente invention consiste donc en une nouvelle voie d'association moléculaire d'additifs, utilisant le glycérol et ses dérivés, destinés à être incorporés dans l'alimentation par le biais de la chélation et aboutissant à la formation d'un matériau se présentant sous la forme d'une poudre sèche organo-silicique. Le procédé objet de l'invention permet d'obtenir une synergie de plusieurs composés utilisés pour la protection et la vectorisation de principes actifs selon trois niveaux de protection : une protection moléculaire par le biais de la chélation, une protection contre les agressions extérieures par la solution miscellaire et enfin une protection par adsorption physique et chimique.

Le procédé original développé permet d'obtenir un chélate de principe actif par voie de synthèse de manière beaucoup plus rapide et moins coûteuse que les voies classiques décrites dans la littérature. Les températures ainsi que les temps sont significativement réduits.

A titre comparatif, la production classique d'un chélate cuivreux de curcumine se fait sous atmosphère contrôlée (azote) dans l'éthanol et dure 3 h ; le complexe est lavé à l'eau et à l'éthanol pour éliminer la curcumine libre puis séché sous vide pour obtenir une poudre (Barik et al, Free Radical Biology & Medecine 39 (2005) : 811-822). Dans le cas de l'invention le chélate est produit sous pression atmosphérique, le solvant est conservé, la curcumine non complexée n'est pas éliminée et peut être protégée par l'ascorbate de sodium. La forme poudre est obtenue non pas par séchage mais par adsorption ce qui est plus économe en énergie. L'étape de chélation dure une demi-heure.

Les avantages du procédé selon la présente invention consistent en outre dans sa faible consommation d'énergie, l'économie en atomes utilisés, l'aspect non-polluant, la sélection et l'activation dans le processus de libération du principe actif.

L'ingestion du complexe final d'actif protégé obtenu selon le procédé objet de l'invention se traduit par :
1 - l'apport d'un antioxydant,
2 - l'apport d'un bactéricide,
3 - l'apport d'énergie,
4 - l'apport d'un améliorateur de l'activité enzymatique digestive.

Ces quatre apports se traduisent par une augmentation des performances zootechniques des animaux comme par exemple l'augmentation de la production laitière par les vaches ou encore une meilleure revalorisation de la ration alimentaire ou encore une inhibition du stress oxydatif se traduisant par un meilleur état de santé générale ou encore une amélioration des performances de reproduction. Chez l'homme les actifs protégés selon l'invention peuvent participer à la prévention des maladies associées aux espèces oxygénées réactives comme les cancers et les maladies cardiovasculaires et neurodégénératives.

Ces avantages sont obtenus grâce à l'invention qui consiste plus précisément en un procédé de protection de principes actifs utilisés dans l'alimentation animale et humaine caractérisé en ce qu'il comprend les étapes suivantes, réalisées à une température inférieure ou égale à 60°C et sous atmosphère non contrôlée :
- mélanger un principe actif avec un cation métallique en présence d'eau et de glycérol au cours d'une réaction de chélation pour obtenir un premier complexe,
- mélanger ledit premier complexe obtenu à l'étape précédente avec du monolaurate de glycérol présentant un degré de pureté supérieur à 30 % au cours d'une réaction d'émulsification pour obtenir une émulsion,
- mélanger l'émulsion obtenue à l'étape précédente avec une source de silice amorphe au cours d'une réaction d'adsorption pour obtenir un complexe final d'actif protégé.

Les principes actifs utilisés dans le cadre de l'invention présentent une fonction béta dicétone stabilisée par une fonction énolique. Il s'agit plus particulièrement de la curcumine, la rutine, la quercétine, l'hespéritine, la naringénine, la myricétine, la lutéoline ou la génistéine ; de préférence, la curcumine.

La curcumine ou diféruloylméthane est le pigment principal du curcuma (Curcuma longa), l'espèce botanique de départ n'ayant aucune importance dans le cadre de la présente invention. Elle est utilisée dans l'alimentation pour ses qualités organoleptiques dont des propriétés de coloration, mais présente également des propriétés médicinales liées à un fort pouvoir antioxydant, ainsi qu'un effet anti-inflammatoire reconnu.

Cette molécule présente donc un grand intérêt en tant que telle sur le plan alimentaire et plus globalement des bénéfices santé. Cependant, elle n'est pas particulièrement bien assimilée par l'organisme, du fait de son instabilité sous forme libre. Ceci explique l'intérêt particulièrement avantageux du procédé mis au point selon l'invention concernant cette molécule précise.

Le principe actif forme un complexe par chélation en présence de cations métalliques qui peuvent être choisis parmi le magnésium, le cuivre, et zinc. Les rendements de complexation varient selon les cations et sont particulièrement avantageux avec le magnésium.

De manière alternative, la réaction de chélation peut être réalisée en présence d'un sel d'ascorbate tel que l'ascorbate de sodium. Dans le cas où le rendement de complexation est inférieur à 100 %, l'ascorbate de sodium complexe le principe actif libre ; l'ascorbate achève l'étape de protection moléculaire.

Il a été observé qu'à un taux inférieur à 30 % de pureté du monolaurate de glycérol, l'étape de suivant l'émulsification ne conduisait pas à la formation d'un complexe structuré, permettant une protection optimale du principe actif. De préférence, le degré de pureté du monolaurate de glycérol sera compris entre 70 et 98 %, exprimé en pourcentage d'alpha monoglycérol. Il est à noter que plus la teneur en alpha monoglycérol du monolaurate de glycérol sera élevée, et plus l'émulsion sera facilement réalisable et stable.

Selon des caractéristiques avantageuses, conformément aux objectifs d'économie du procédé selon la présente invention, la réaction d'émulsification sera réalisée entre 50 et 60°C et la réaction d'adsorption entre 40 et 60°C.

Le procédé ainsi décrit permet d'obtenir un complexe final actif protégé particulièrement adapté pour une utilisation en tant que complément alimentaire pour l'homme ou l'animal.

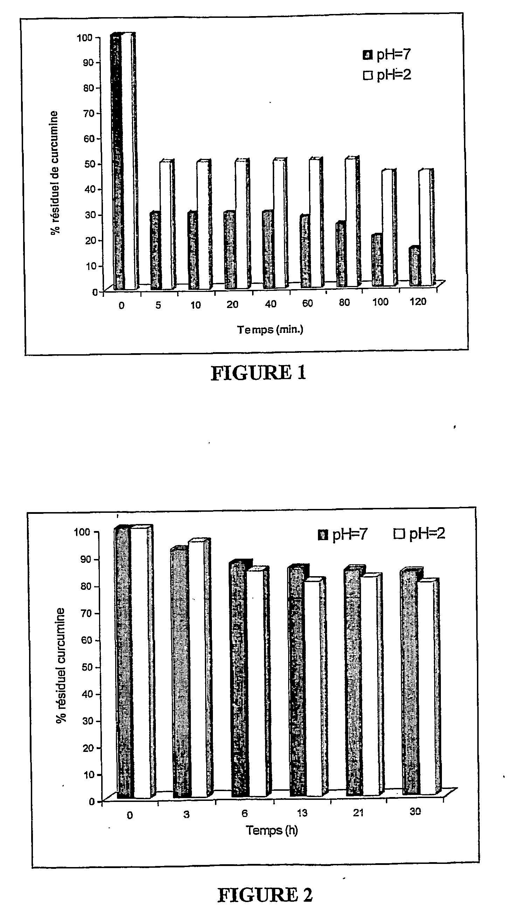

Les figures 1 et 2 permettent une comparaison entre la stabilité de la curcumine seule (figure 1) avant protection, et la stabilité de la curcumine protégée avec le procédé selon l'invention (figure 2). Le temps est exprimé en minutes sur la figure 1 tandis qu'il est exprimé en heures sur la figure 2.

La stabilité du produit final obtenu selon l'invention a été testée in vitro dans des conditions de pH proches des conditions physiologiques (pH autour de 2 pour l'estomac du monogastrique ou la caillette du polygastrique), pH voisin de la neutralité pour l'intestin grêle du monogastrique ou polygastrique ou le rumen du polygastrique). Une stabilité de l'ordre de 85 % après 30h a été obtenue pour la curcumine protégée selon l'invention (figure 2) contre 30-50 % de stabilité après 5 min. pour la curcumine seule (figure 1).

### EXEMPLE

L'exemple qui suit est donné à titre d'illustration de l'invention, en aucun cas il ne saurait être interprété de manière limitative et restreindre la portée de la présente demande.

### 1) Chélation-prémélange n°1

Faire chauffer de l'eau (15,74%) et du glycérol de pureté 98 % (17,76%) entre 50 et 60 °C dans une cuve avec un mélange doux.

Ajouter l'oligo élément (sulfate de zinc) 4,63 % au mélange eau /glycérol chauffé, maintenir à 50-60°C sous agitation douce.

Mélanger avec un émulsionneur-disperseur pendant un temps dimensionné en fonction de la quantité à traiter et du matériel.

Ajouter la curcumine (5,92 %) au mélange eau /glycérol/sulfate de zinc

Mélanger avec un émulsionneur-disperseur pendant un temps dimensionné en fonction de la quantité à traiter et du matériel.

Ajouter l'ascorbate de sodium (3,19%) au mélange eau /glycérol/sulfate de zinc /curcumine maintenu à 50-60°C sous agitation douce.

Mélanger avec un émulsionneur-disperseur pendant un temps dimensionné en fonction de la quantité à traiter et du matériel.

Rendement de complexation >40%

### 2) Emulsion-prémélange n°2

Ajouter le dérivé du glycérol (monolaurate de glycérol de pureté 84 % exprimée en alpha monoglycéride) préalablement chauffé à 50-60°C (17,76%) dans le prémélange n°1 en une seule fois et maintenir la température à 55°C avec une agitation passive pendant l'introduction du monolaurate de glycérol.

Mélanger avec un émulsionneur-disperseur pendant un temps dimensionné en fonction de la quantité à traiter et du matériel.

### 3) Adsorption

Mettre le prémélange n°2 (65%) à la température de 40-60°C sur support acide silicique précipité séché (35%).

Mélanger à l'aide d'un mélangeur approprié.

## Revendications

1. Procédé de protection de principes actifs utilisés dans l'alimentation animale et humaine **caractérisé en ce qu'**il comprend les étapes suivantes, réalisées à une température inférieure ou égale à 60°C et sous atmosphère non contrôlée :
- mélanger un principe actif avec un cation métallique en présence d'eau et de glycérol au cours d'une réaction de chélation pour obtenir un premier complexe,
- mélanger ledit premier complexe obtenu à l'étape précédente avec du monolaurate de glycérol présentant un degré de pureté supérieur à 30 % au cours d'une réaction d'émulsification pour obtenir une émulsion,
- mélanger l'émulsion obtenue à l'étape précédente avec une source de silice amorphe au cours d'une réaction d'adsorption pour obtenir un complexe final d'actif protégé.

2. Procédé selon la revendication 1 **caractérisé en ce que** le principe actif présente une fonction béta dicétone stabilisée par une fonction énolique.

3. Procédé selon la revendication 1 **caractérisé en ce que** le principe actif est choisi parmi la curcumine, la rutine, la quercétine, l'hespéritine, la naringénine, la myricétine, la lutéoline ou la génistéine.

4. Procédé selon la revendication précédente **caractérisé en ce que** le principe actif est de préférence la curcumine.

5. Procédé selon l'une quelconque des revendications précédentes **caractérisé en ce que** les cations métalliques sont choisis parmi le magnésium, le cuivre, et le zinc

6. Procédé selon l'une quelconque des revendications précédentes **caractérisé en ce que** la réaction de chélation se fait en présence d'un sel d'ascorbate.

7. Procédé selon l'une quelconque des revendications précédentes **caractérisé en ce que** le degré de pureté du monolaurate de glycérol ajouté au cours de la réaction d'émulsification est compris entre 70 et 98%.

8. Procédé selon l'une quelconque des revendications précédentes **caractérisé en ce que** le degré de pureté du monolaurate de glycérol ajouté à l'étape d'émulsification est exprimé en pourcentage d'alpha monoglycérol.

9. Procédé selon l'une quelconque des revendications précédentes **caractérisé en ce que** la réaction d'émulsification est réalisée entre 50 et 60°C.

10. Procédé selon l'une quelconque des revendications précédentes **caractérisé en ce que** la réaction d'adsorption est réalisée entre 40 et 60°C.

11. Utilisation du produit obtenu par le procédé selon l'une quelconque des revendications 1 à 10 pour la préparation de compléments alimentaires pour l'homme ou l'animal.

## Claims

1. Method for protecting active principles used in human and animal food **characterised in that** it comprises the following steps, carried out at a temperature below or equal to 60°C and in an uncontrolled atmosphere:
- mixing an active principle with a metal cation in the presence of water and glycerol during a chelation reaction to obtain a first complex,
- mixing the said first complex obtained in the previous step with glycerol monolaurate having a degree of purity greater than 30% during an emulsifying reaction to obtain an emulsion,
- mixing the emulsion obtained in the previous step with an amorphous silica source during an adsorption reaction to obtain a final complex of the protected active agent.

2. Method according to claim 1 **characterised in that** the active principle has a beta diketone group stabilised by an enolic group.

3. Method according to claim 1 **characterised in that** the active principle is selected from curcumin, rutin, quercetin, hesperitin, naringenin, myricetin, luteolin or genistein.

4. Method according to the preceding claim **characterised in that** the active principle is preferably curcumin.

5. Method according to any one of the preceding claims **characterised in that** the metal cations are selected from magnesium, copper, and zinc.

6. Method according to any one of the preceding claims **characterised in that** the chelation reaction takes place in the presence of an ascorbate salt.

7. Method according to any one of the preceding claims **characterised in that** the degree of purity of the glycerol monolaurate added during the emulsifying reaction is comprised between 70 and 98%.

8. Method according to any one of the preceding claims **characterised in that** the degree of purity of the glycerol monolaurate added at the emulsifying step is expressed as a percentage of alpha monoglycerol.

9. Method according to any one of the preceding claims **characterised in that** the emulsifying reaction is carried out at between 50 and 60°C.

10. Method according to any one of the preceding claims **characterised in that** the adsorption reaction is carried out at between 40 and 60°C.

11. Use of the product obtained by the method according to any one of claims 1 to 10 for the preparation of food supplements for humans or animals.

## Patentansprüche

1. Verfahren zum Schützen von Wirkstoffen, die bei Nahrungs- und Futtermitteln verwendet werden, **dadurch gekennzeichnet, dass** es die nachfolgenden Schritte enthält, die bei einer Temperatur von unter oder gleich 60 °C unter nicht kontrollierter Atmosphäre erfolgen:
- Vermischen eines Wirkstoffs mit einem Metallkation bei vorhandenem Wasser und Glycerin während der Reaktion einer Chelatbildung, um einen ersten Komplex zu gewinnen,
- Vermischen des im vorhergehenden Schritt gewonnenen ersten Komplexes mit Glycerinmonolaurat, das einen Reinheitsgrad von über 30 % aufweist, während der Reaktion einer Emulgierung, um eine Emulsion zu gewinnen,
- Vermischen der im vorhergehenden Schritt gewonnenen Emulsion mit einer Quelle amorpher Kieselsäure während einer Adsorptionsreaktion, um einen Endkomplex des geschützten Wirkstoffs zu gewinnen.

2. Verfahren nach Anspruch 1, **dadurch gekennzeichnet, dass** der Wirkstoff eine beta-Diketon-Funktion aufweist, die über eine Enol-Funktion stabilisiert ist.

3. Verfahren nach Anspruch 1, **dadurch gekennzeichnet, dass** der Wirkstoff ausgewählt ist aus Kurkumin, Rutin, Quercetin, Hesperitin, Naringenin, Myricetin, Luteolin oder Genistein.

4. Verfahren nach dem vorangehenden Anspruch, **dadurch gekennzeichnet, dass** der Wirkstoff vorzugsweise Kurkumin ist.

5. Verfahren nach einem der vorangehenden Ansprüche, **dadurch gekennzeichnet, dass** die Metallkationen ausgewählt sind aus Magnesium, Kupfer und Zink.

6. Verfahren nach einem der vorangehenden Ansprüche, **dadurch gekennzeichnet, dass** die Reaktion der Chelatbildung bei vorhandenem Ascorbat-Salz erfolgt.

7. Verfahren nach einem der vorangehenden Ansprüche, **dadurch gekennzeichnet, dass** der Reinheitsgrad von Glycerinmonolaurat, das während der Reaktion der Emulgierung beigemengt wird, zwischen 70 und 98 % liegt.

8. Verfahren nach einem der vorangehenden Ansprüche, **dadurch gekennzeichnet, dass** der Reinheitsgrad von Glycerinmonolaurat, das während des Schrittes der Emulgierung beigemengt wird, in einem Alpha-Monoglycerin-Prozentsatz ausgedrückt wird.

9. Verfahren nach einem der vorangehenden Ansprüche, **dadurch gekennzeichnet, dass** die Reaktion der Emulgierung zwischen 50 und 60 °C erfolgt.

10. Verfahren nach einem der vorangehenden Ansprüche, **dadurch gekennzeichnet, dass** die Adsorptionsreaktion zwischen 40 und 60 °C erfolgt.

11. Verwendung des mit dem Verfahren nach einem der Ansprüche 1 bis 10 erhaltenen Erzeugnisses zur Zubereitung von Nahrungs- bzw. Futterergänzungsmitteln für Mensch oder Tier.
